# EUROPEAN PATENT SPECIFICATION

(11) **EP 2 045 504 B1**
(45) Date of publication and mention of the grant of the patent: **24.08.2011**
(21) Application number: 08165927.8
(22) Date of filing: 06.10.2008
(51) Int. Cl.: F16L 41/02, F16L 47/32, H02G 15/013, H02G 15/113, G02B 6/44

(54) **connecting piece for protective cable pipes**
Verbindungsstück für Kabelschutzrohre
Connecteur de conduit de protection de câbles

(30) Priority: 04.10.2007 NL 1034471
(43) Date of publication of application: 08.04.2009
(73) Proprietor: Wavin B.V., 8011 CW Zwolle (NL)
(72) Inventor: Huisjes, Alwin, 7695 SP Bruchterveld (NL); Mulder-Grootoonk, Jeannette, 7784 DD Ane (NL); Poppe, Richard, 7608 LV Almelo (NL); Vos, Bastiaan, 9406 VA Assen (NL); Van Dijk, Berend Jan, 7777ST Schuinesloot (NL)
(74) Representative: van Bouwelen, Franciscus Maria

(56) References cited:
- FR-A- 2 758 400
- US-A1- 2002 191 941
- US-B1- 6 573 455

## Description

The invention relates to a connecting piece for connecting two or more pipe ends of protective cable pipes, which connecting piece comprises at least two shell parts which are divided by a dividing plane and fit together by their shell edges situated in the dividing plane, in which at least one of the shell edges of one of the shell parts is provided with a sealing rib and the shell part situated opposite is provided with a groove at the corresponding shell edge, the sealing rib being accommodated in the groove when the shell parts are fitted together in order to seal the partial seam which is formed between the abutting shell edges, and in which the connecting piece has at least two socket ends for connecting the pipe ends.

Protective cable pipes are often laid in the ground and used to guide through, for example, fibre optic cables or other communication or electrical cables. When protective cable pipes are used for fibre optic cables, several small pipes of a smaller diameter are often accommodated therein, often referred to as miniducts, into which the fibre optic cables are or can be introduced in turn. Connecting pieces according to the invention are often used in pipes which have already been laid and contain cables or miniducts, with or without cables, in order to be able to produce connections retrospectively between two or more pipe ends without having to cut through the miniducts or cables. In particular, such connecting pieces are designed in order to be able to lay branches from one or more of the miniducts or cables. In this case, a piece of the protective pipe is cut away, thus exposing the miniducts or cables contained therein. The desired miniduct(s) or cables can then be branched, following which a connecting piece is fitted which has a socket for both cut ends of the existing protective cable pipe and a socket for the protective cable pipe of the branch. In order to be able to fit the connecting piece retrospectively without having to cut through the miniducts or cables, the connecting piece consists of shell parts which are placed against one another around the pipe ends.

EP 499 885 A1 discloses a branch piece with two or more socket ends. The known branch piece consists of two plastic shell halves. The edge of one shell half has a sealing lip and the edge of the other shell half is provided with a groove in which the sealing lip of the other shell half is accommodated when the shell halves are placed against one another. Half a sealing ring is in each case fitted in the socket ends. In use, the ring halves of the sealing ring surround the pipe. In one of the shell halves, the sealing lip is integrally formed with the half sealing rings. The sealing lips and the sealing ring halves are made from a thermoplastic elastomer. The shell halves with the sealing lips and the sealing ring halves are produced by means of co-injection moulding.

US 6,880,219 B2 discloses a branch piece which consists of two shell halves. The branch piece has two socket ends for the pipe ends of the existing protective cable pipe and one socket end for the branched protective cable pipe. A deformable sealing strip is provided on the edge of one of the shell halves and a sealing groove is provided in the edge of the other shell half. When the shell halves are placed against one another, the sealing strip is accommodated in the groove, resulting in a waterproof or at least mud-proof sealing there. The branch piece is in each case provided with screw thread on the outer sides of the socket ends onto which a coupling nut is screwed consisting of two coupling nut halves which can be coupled. A deformable ring is fitted in the space between the inner surface of the coupling nut and the protective cable pipe, which deformable ring is clamped onto the pipe by tightening the coupling nut as a result of interaction with a conical surface provided in the coupling nut. The ring seals the pipe in a waterproof or at least mud-proof manner.

With the structure from US 6,880,219 B2, the sealing around the pipe end and the sealing in the dividing plane between the shell halves are not joined to one another. In the dividing plane between the shell halves, there is an area between the end side of the sealing strip and the coupling nut where no sealing element is present and through which water could seep. With the branch piece known from EP 499 885 A1, this problem is eliminated by the fact that one half of the sealing ring in the socket end and the sealing lip are formed as a single part. However, this has the drawback that the socket ends of the branch piece known from EP 499 885 A1 can only accommodate a pipe of one specific diameter, whereas in practice there is now a key large degree of variation in pipe diameter, in particular with protective cable pipes. As a result thereof, a separate sealing will have to be produced for each individual pipe diameter, thus requiring an expensive separate co-injection mould.

FR 2758400 discloses a cable fitting assembled from two shells. The sealing arrangement comprises a circumferential sealing strip extending between the shells, and a sealing ring which is to be positioned in the sockets. In one example, sealing contact is established between ends of the sealing strip and the sealing ring. The ends are received in notches in the sealing ring. This imposes a difficulty in the assembling of the cable fitting in that the sealing ring must be oriented exactly such that it enables the ring ends to be received in the notches. The sealing is established by contact of a cylindrical portion of the sealing ring.

It is an object of the invention to provide an improved connecting piece.

According to the invention, this object is achieved by a connecting piece according to the preamble of claim 1, characterized by the feature that the contact surface in the socket end is a conical surface which narrows from the outside to the inside in the axial direction, wherein the sealing rib has an end portion which is situated in the contact surface of the socket end so that the outer surface of the sealing ring, in use, bears against the end portion of the sealing rib in a sealing manner.

With the connecting piece according to the invention, the sealing ring and contact surface are designed and dimensioned in such a manner that the sealing ring, in use, is compressed to a certain degree between the contact surface and the pipe end, so that an outer surface of the sealing ring bears against the contact surface and the end portion of the sealing rib which is located therein with a certain pressure force. As a result thereof, an excellent sealing is achieved.

The contact surface is a conical surface which narrows from the outside to the inside in the axial direction. The sealing ring may, for example, have a convex, conical or cylindrical outer surface. With such a design, the sealing ring can be pushed into the socket end in the axial direction in a simple manner, the contact pressure between the sealing ring and the contact surface gradually increasing, evenly distributed along the outer periphery of the sealing ring.

As a result of the design according to the invention, the sealing between the shell parts and the sealing between the socket ends and the pipe ends adjoin one another, resulting in a complete sealing of the inside of the connecting piece with respect to the exterior. Since the sealing ring is a separate element, the inner diameter thereof can be selected on the basis of the outer diameter of the pipe. By means of the connecting piece according to the invention, it is thus possible to connect protective cable pipes with a large range of outer diameters, while only a suitable sealing ring has to be selected for the respective outer diameter of the pipe end. This results in a connecting piece which seals effectively, can be used universally and can be produced relatively inexpensively.

Preferred embodiments of the invention are defined in the dependent claims.

The invention will be explained in more detail below with reference to the drawing, in which:
Fig. 1 shows a shell half of a preferred embodiment of a connecting piece according to the invention;
Fig. 2 shows a detail of the shell part from Fig. 1 in side view at the location of a socket end;
Fig. 3 shows a perspective view of the socket end from Fig. 2;
Fig. 4 shows a front view in perspective of a socket end of the preferred embodiment of the connecting piece according to the invention;
Fig. 5 and Fig. 6 show cut-away views in perspective of the socket end of Fig. 2 with a pipe end arranged therein;
Fig. 7 shows a perspective cross section at the location of the shell edge of two shell parts of the connecting piece according to the invention which are placed on top of one another;
Fig. 8 shows a cross section at right angles to the shell edge with two shell edges placed against one another;
Fig. 9 shows a cross section at the location of the contact surface in the socket end at right angles to the shell edge with two shell edges placed against one another;
Fig. 10a and Fig. 10b show a perspective view from the rear and from the front, respectively, of a possible embodiment of a securing ring for use in a socket end,
Fig. 11a and Fig. 11b show a perspective view from the rear and from the front, respectively, of another possible embodiment of a securing ring for use in a socket end,
Fig. 12a and Fig. 12b show a perspective view from the rear and from the front, respectively, of yet another possible embodiment of a securing ring for use in a socket end,
Fig. 13 shows an exploded perspective view of a possible embodiment of a socket end of a connecting piece according to the invention;
Fig. 14 shows a cross section of a possible embodiment of a sealing ring for use in a socket end according to the invention; and
Fig. 15 shows a perspective view of a possible embodiment of a socket end half according to the invention.

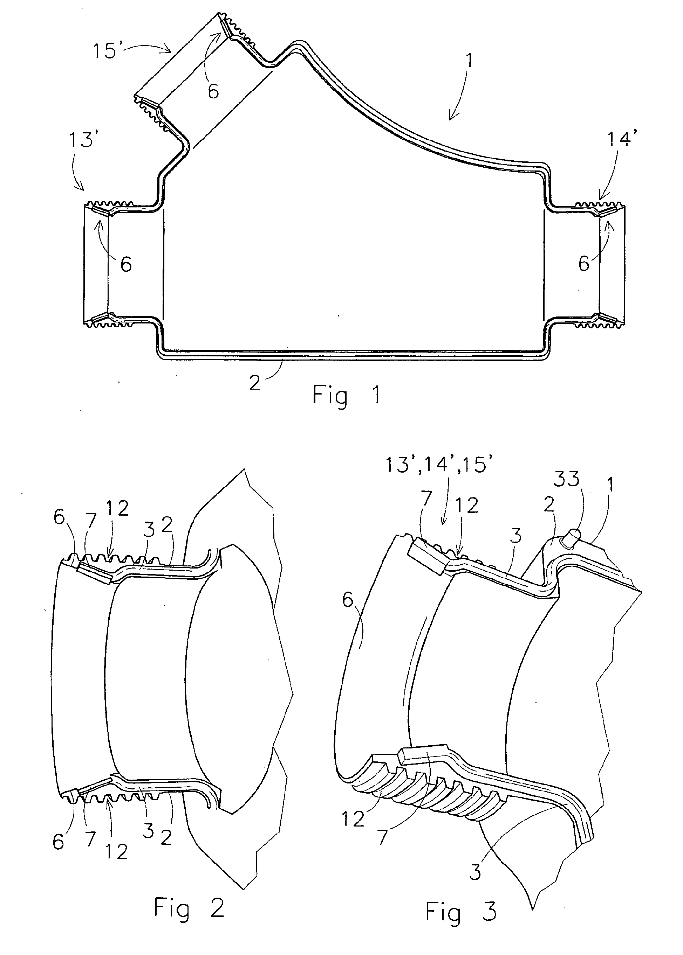

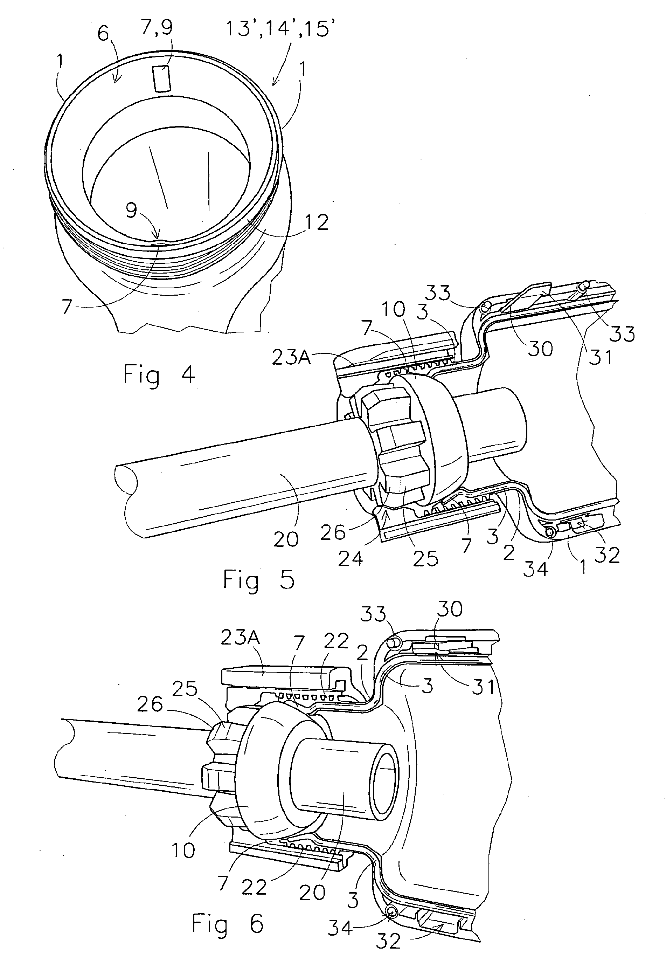

Fig. 1 shows a top view of a shell half 1 of a branch piece for protective cable pipes. The shell half 1 is made from plastic by means of injection moulding and, together with a substantially identical, albeit mirror-symmetrical shell half (not shown), in the assembled state, forms a housing. To this end, the shell halves 1 are placed against one another in a dividing plane by their shell edges 2. The shell half 1 is provided with three half socket ends 13', 14' and 15' which, in the assembled state, form socket ends 13, 14 and 15 (see Fig. 4) for accommodating three pipe ends, as is illustrated in Figs. 5 and 6 and as will be discussed below.

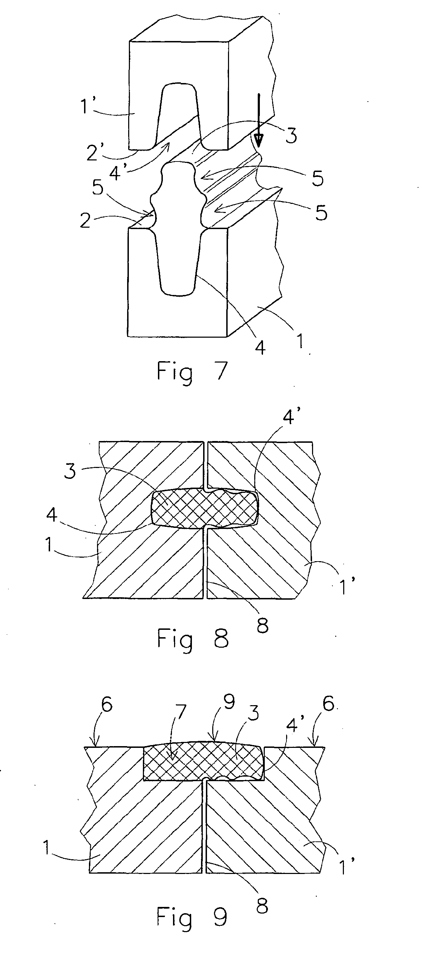

The illustrated shell half 1 has a sealing rib 3 on the shell edge 2. The other shell part 1' has a groove 4' in the edge 2', in which the sealing rib 3 is accommodated when the shell parts 1 and 1' are placed on top of one another, as is illustrated in Fig. 7. Fig. 8 shows a cross section in which the sealing rib 3 is accommodated completely in the groove 4'. The sealing rib 3 is preferably made from a thermoplastic elastomer (TPE) which is applied to the shell edge 2 by means of co-injection moulding and is securely attached thereto. To this end, a groove 4 is provided in the shell edge 2 which is filled with the TPE during co-injection moulding, thus anchoring the sealing rib 3 to the shell edge 2. The sealing rib 3 may be provided on one or both of its sides with curvatures which form longitudinal ridges 5. The longitudinal ridges 5 provide a line sealing against the side walls of the groove 4'.

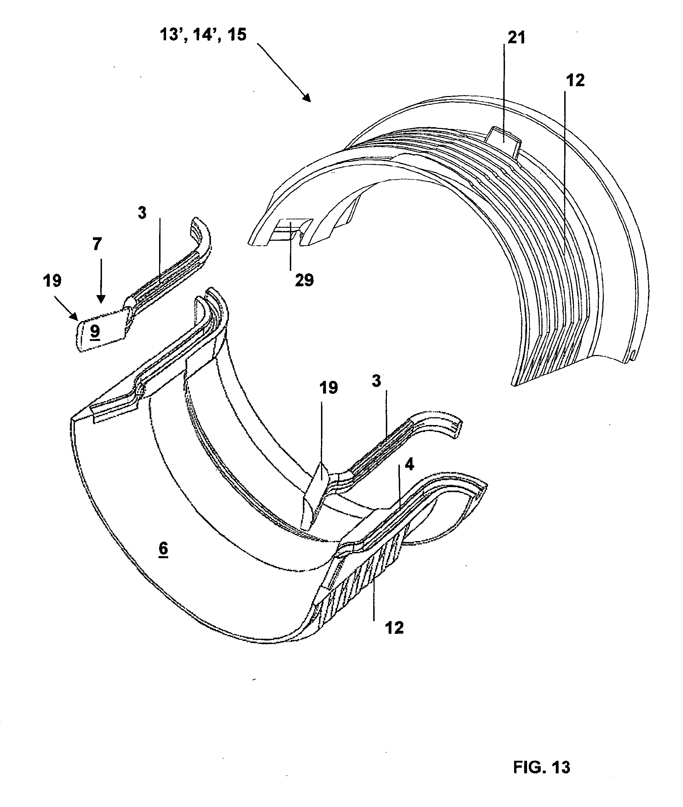

On the inside, the socket ends 3-5 are provided with a conical contact surface 6 which narrows from the outside to the inside, as can clearly be seen in Fig. 3. At the location of the socket ends, the sealing rib 3 has an end portion 7 which comes to lie on the surface at the conical surface 6, as can clearly be seen in Figs. 2 and 3. The end portion 7 of the rib 3 extends parallel to the conical contact surface 6 over a certain distance and slightly protrudes inwards with respect to the contact surface 6. Preferably, the side surface 9 of the end portion 7 of the sealing rib 3 is slightly convex, as is illustrated in Fig. 9. According to an alternative embodiment, the end portion 7 can lie substantially level with the surrounding contact surface 6. The groove 4' in the other shell part 1' for accommodating the sealing rib 3 also ends in the contact surface 6 in the socket end and there runs parallel to the contact surface 6 over a certain distance so that the part of the end portion 7 of the sealing rib 3 which protrudes with respect to the dividing plane 8 between the shell parts 1 and 1' can be accommodated therein. Alternatively, the end of said groove 4', at least the portion 29 thereof which, in use, bears against the end portion 7 of the sealing rib 3, may have a concave configuration, as is illustrated in Fig. 13. The groove 4 in the opposite shell part 1 may have a similar concave configuration (not shown), which offers advantages particularly when the sealing rib 3 is accommodated in said groove 4 with a degree of freedom of movement for reasons which are still to be explained below.

The side 19 of the end portion 7 which, in use, bears against the concave surface 29 of groove 4' preferably has a correspondingly convex shape, as is illustrated in Fig. 13. The portion of the end portion 7 which is inserted in the opposite groove 4 may alsoe have such a convex shape (not shown).

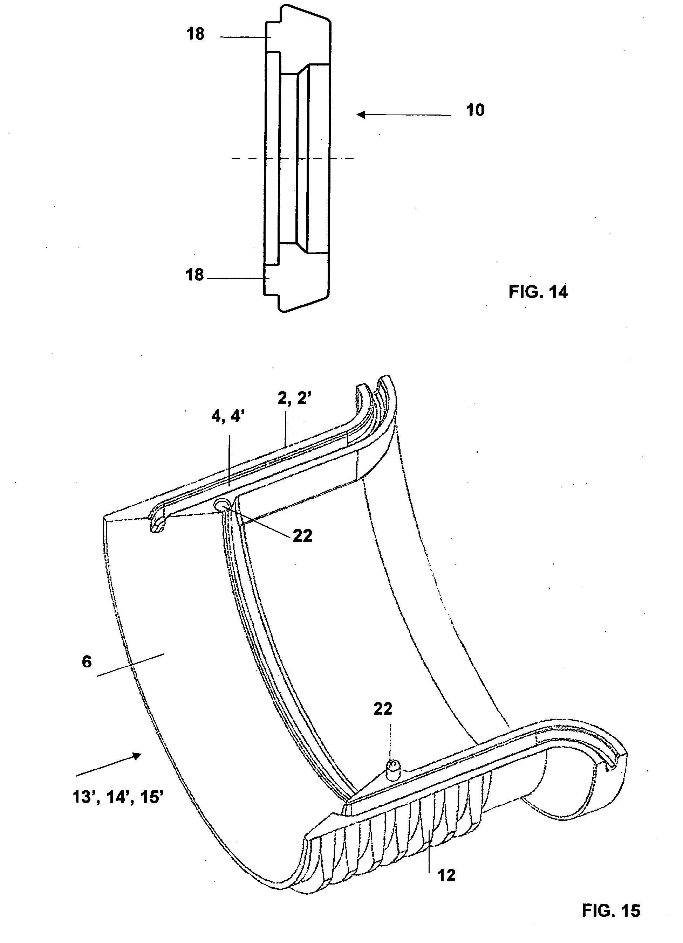

According to yet another alternative embodiment, the grooves 4, 4' may have a configuration as illustrated in Fig. 15, in which only one socket end half 13', 14', 15' is shown and in which the sealing rib 3 has been omitted for the sake of clarity. In this embodiment, the grooves 4, 4' in the respective shell edges 2, 2' have a substantially constant cross section along their entire length and they extend up to the contact surface 6. Also, the associated sealing rib 3 has substantially the same cross section along its entire length and an end thereof ends in the contact surface 6. If desired, this end may protrude slightly inwards with respect to the contact surface 6. In addition or alternatively, the end may be made of a relatively hard material so that this end is not pressed outwards, that is to say into the grooves 4, 4' when the sealing ring 10 is fitted.

The advantage of the embodiment shown in Fig. 15 is that the grooves 4, 4' and the sealing rib 3 are of a relatively simple configuration, as a result of which a relatively simple mould will suffice. Furthermore, the sealing rib 3 does not have to follow complicated bends. As a result thereof, more space is available between the contact surface 6 and the grooves 4, 4', for example for positioning means 22, such as the illustrated tenon-mortise feature for correctly positioning the shell parts 1, 1' with respect to one another.

Figs. 5 and 6 show the socket end 13, 14, 15 with a pipe inserted therein, in which the shell part 1' has been removed for the sake of clarity. As can be seen, a sealing ring 10 is arranged in the socket end 13, 14, 15. The sealing ring 10 is preferably made of an elastomer, for example rubber, and the radially outer side 11 thereof lies against the conical contact surface 6. In this case, the sealing ring 10 also lies against the side surface 9 of the end portions 7 of the sealing ribs 3 which protrude slightly with respect to the conical contact surface 6. Preferably, the sealing ring 10 has a convex outer surface, more preferably this is a sector of a sphere. This makes it possible to tilt an inserted pipe with sealing ring 10 inside the socket end with respect to the centre axis of the socket end and still maintain an effective sealing. According to an alternative embodiment, the sealing ring 10 has a conical outer surface, as is illustrated in Fig. 14. A sealing ring 10 according to the invention can furthermore, on a side which is turned outwards in use, be provided with a tapered end 18, as is illustrated in Fig. 14, namely in such a way that this end 18 can be deformed relatively easily if a pressure force is applied thereto in the axial direction. Naturally, a sealing ring 10 with another type of outer surface, for example a spherical or cylindrical outer surface, may be provided with the same tapered end 18. In the illustrated exemplary embodiment, the tapered end 18 is free from both the contact surface 6 and the pipe end 20 which, in use, extends through the sealing ring 10. In alternative embodiments (not shown), the tapered end 18 may be free from only one of the abovementioned parts.

The socket end 13, 14, 15 is provided on the outer side with an outer screw thread 12. In addition, one or more stop lugs 21 may be provided around the outer periphery of the socket end 13, 14, 15 (shown in Fig. 13). A coupling nut 23 can be screwed onto the outer screw thread 12. The coupling nut 23 consists of two coupling nut halves which can be connected to one another and only one of which is shown in Figs. 5 and 6 for the sake of clarity and denoted by reference numeral 23A. On the inner side, the coupling nut 23 has a conical surface 24 which narrows towards the outside. In the fitted position, a securing ring 25 is provided in the coupling nut 23, the radially outer surface 16 of which bears against the conical surface 24 of the coupling nut 23. A head end face of the securing ring 25 bears against the sealing ring 10. The securing ring 25 is made from a flexible material, such as for example plastic or metal. By tightening the coupling nut 23, the securing ring 25 is pressed axially inwards, as a result of which the sealing ring 10 is then in turn pushed inwards. This results in the sealing ring 10 being pressed firmly against the conical contact surface 6 which, inter alia, results in the sealing ring 10 being compressed radially inwards and being clamped around the inserted pipe end 20. Furthermore, a sealing is produced between the outer side of the sealing ring 10 and the contact surface 6. As mentioned above, the outer surface of the sealing ring 10 bears against the end section 7, 17 of the sealing rib 3.

As mentioned above, a connecting piece according to the invention is suitable for connecting pipe ends 20 having different outer diameters. To this end, in each case only one sealing ring 10 with a suitable inner diameter has to be chosen. Depending on the selected sealing ring 10, the axial distance over which the coupling nut 23 has to be tightened may differ. The stop lugs 21 prevent the coupling nut 23 from being overtightened, as a result of which the socket end halves 13', 14', 15' could be forced apart by the sealing ring 10. The tapered end 18 of the sealing ring 10 ensures that this end 18 is deformed first before the socket end halves 13', 14', 15' are forced apart when the coupling nut 23 is tightened further.

Should the socket end halves 13', 14', 15' indeed be forced apart, then a reliable sealing between the end portion 7 of the sealing rib 3 and the shell parts 1, 1' is ensured by the fact that the convex side 19 of the end portion 7 can always bear tightly against the concave surface 29 of the groove 4' in the shell part 1'.

The securing ring 25 is also pressed radially inwards by the conical surface 24 in the coupling nut 23, as a result of which the securing ring 25 engages firmly with the outer side of the pipe end 20. When a tensile force is exerted on the pipe end 20, the securing ring 25 will engage even more firmly on the pipe end 20 as a result of the interaction with the conical surface 24.

In the embodiment illustrated, the securing ring 25 has an oblique surface 26 which bears against the conical surface 24 of the coupling nut 23. In another preferred embodiment, the securing ring 25 could also have an outer surface which is a section of a spherical surface. This makes it possible to tilt the securing ring inside the coupling nut 23 with respect to the centre axis of the socket end to a certain degree while still ensuring a reliable engagement and action as a result of the conical surface 24 of the coupling nut 23.

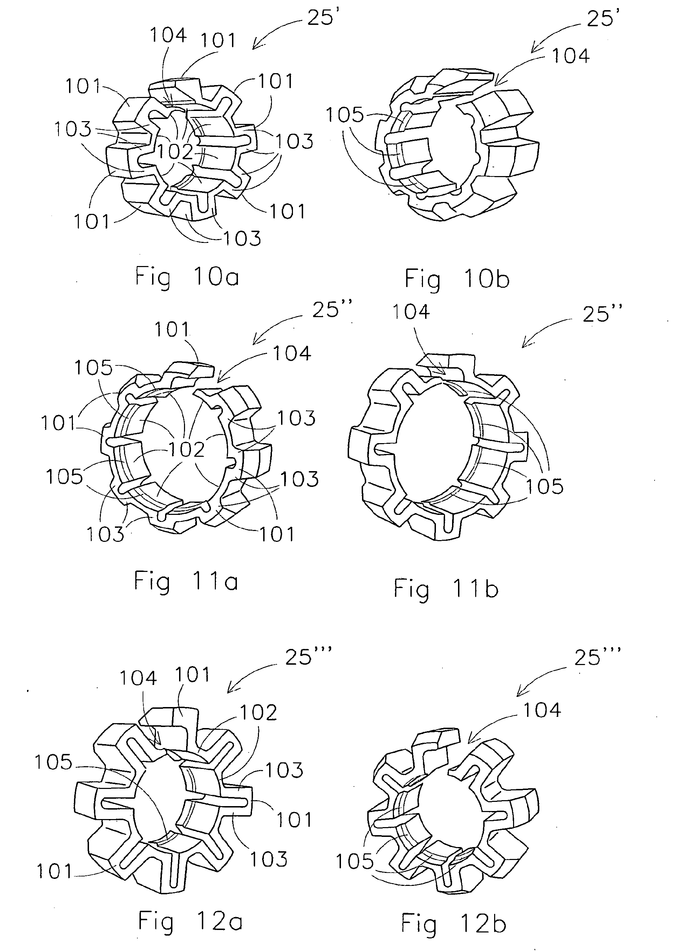

Viewed in cross section, the illustrated securing ring 25, of which a number of possible variants are shown in more detail in Figs. 10 to 12 which are denoted by reference numerals 25', 25" and 25"', has an angular zigzag shape. The zigzag shape has ring segments 101 extending tangentially and axially. The radially outward sides of the outermost ring segments 101 together form an outer ring surface. Furthermore, the zigzag shape has inner ring segments 102 which extend tangentially and axially. The radially inwardly facing sides of the inner ring segments 102 together form an inner ring surface. The outer ring segments 101 are in each case connected to the inner ring segments 102 by connecting parts 103 which substantially extend in the radial direction.

The outer ring surface has a rear, substantially cylindrical part which, in use, extends in the insertion direction of the socket end, and a front conical portion which, in use, extends in the insertion direction of the socket end. The conical portion of the outer ring surface corresponds to the oblique surface 26 from Fig. 6 and, in use, bears against the conical surface 24 of the coupling nut. It is also possible to design the outer ring surface completely or partially as a part of a spherical surface, as a result of which an inserted pipe end may extend at a slight angle with respect to the centre axis of the socket end, while still achieving a good contact with the conical surface 24 of the coupling nut 23 and ensuring a good resistance to tensile strain.

The inner ring surface is provided with one or more radially inwardly directed teeth 105 for engaging with the outer side of a pipe end, thus achieving a good resistance to tensile strain of the pipe end in the socket end.

The securing ring 25, 25', 25", 25"' has a cut 104, by means of which the securing ring 25, 25', 25", 25"' can be fitted over a pipe end from the side. Preferably, the cut does not run exactly radially, but in a direction between radial and tangential. The cut thus extends at an oblique angle, that is to say not at right angles, with respect to the outer ring segments 101 and inner ring segments 102. The outer ring segments 101 and the inner ring segments 102 will overlap at the cut. This has the advantage that the end face of the securing ring 25, 25', 25", 25"' which, in use, bears against the likewise cut sealing ring 10, supports said sealing ring 10 as much as possible. This prevents as much as possible the situation that when the cut in the sealing ring 10 unexpectedly comes to lie at the location of the cut 104 in the securing ring 25, 25', 25", 25"', the sealing ring 10 is deformed in the axial direction as little as possible there. Such a deformation of the sealing ring 10 could adversely affect the sealing. Preferably, the cut is provided at the location of a connecting part 103, as a result of which the outer and inner ring segments 101 and 102, respectively, provide as large a surface area as possible for engaging with the coupling nut 23 and the pipe end, respectively, which has a positive effect on the tensile strength of the coupling.

The illustrated structure of the securing ring 25, 25', 25", 25"' allows a large variation in diameter of the inserted pipes. The diameter of the outer ring surface is substantially fixed and is matched to the diameter of the socket end. The diameter of the inner ring surface of the securing ring 25, 25', 25", 25"' may be adjusted to a sufficient degree in the radial direction. This is a result of the zigzag shape which allows a deformation of the ring so that the latter fits tightly around a pipe end. Furthermore, the cut 104 allows the outer ring segments 101 and inner ring segments 102 to overlap, as a result of which the inner diameter of the ring 25 can be reduced while still achieving a reliable support for the sealing ring 10.

In practice, it is preferred to provide the connecting pieces consisting of shell parts 1, 1' with socket ends 13, 14, 15 of one single diameter. A suitable sealing ring and securing ring may be chosen for different pipe diameters in order to securely hold the respective pipe in the socket end 13, 14, 15 in a reliably sealing manner and so that it is resistant to tensile strain. The flexible zigzag shape of the securing ring 25 illustrated is highly suitable to ensure a tension-resistant coupling even at relatively large differences in diameter between the socket end 13, 14, 15 and the pipe. Apart from that, such securing rings, some examples of which are given in Figs. 10 to 12, can also be used in other applications than the application described here involving a connecting piece comprising shell parts 1, 1'. Thus, the securing rings 25 can, for example, also be used with insertion sockets.

In use, the illustrated branch piece is used as follows:
from an already fitted protective cable pipe which already has miniducts or cables running through it, a part is removed, thus creating two pipe ends and exposing the miniducts or cables. Subsequently, one or more of the miniducts or cables can then be branched. The branched miniducts or cables are in turn passed through a protective cable pipe, one end of which is situated near the branch point.

Then, a sealing ring 10 is provided around each of the three pipe ends 20 of the protective cable pipes from the side. To this end, the sealing ring 10 has been cut or is being cut in one location in the axial direction. In addition, a securing ring 25 having a cut, as described above, is provided on each pipe end 20 in a similar manner from the side.

The shell parts 1 and 1' are then placed against one another in the above-described manner by their edges 2, 2' around the part where a section of pipe has been removed, so that when they are joined together, they surround the initially exposed miniducts or cables. In this case, the three socket ends 13, 14, 15 are also fitted around the three pipe ends 20. The sealing ring 10 is axially inserted into the socket end 13, 14, 15 until it bears against the conical contact surface 6. The shell parts 1 and 1' are coupled together by means of snap connections which are provided all along the shell edges 2. Figs. 5 and 6, for example, show a spring lip 30 provided on the shell edge 2 with a hook part 31 which can be inserted into an opening in the edge 2' of the opposite shell part 1' in order to hook behind an edge of said opening. Such an opening is also provided in Figs. 5 and 6 in the same shell part 1 and denoted by reference numeral 32. In addition, positioning lugs 33 and positioning recesses 34 may be present on the shell edge 2, which can interact with the same associated positioning recesses and positioning lugs of the other shell part 1'.

Subsequently, in addition to the securing ring 25, the coupling nut 23 is fitted around the pipe end 20 by bringing the coupling nut halves 23A towards one another and coupling them together. In the illustrated case, each coupling nut half 23A has a locking rib 27 at its tangential end and a receiving groove 28 at its other tangential end. By axially sliding the locking rib 27 into the receiving groove 28 of the other coupling nut half 23A, the coupling nut halves 23A are releasably coupled together and fixed with respect to one another in the direction of rotation. After the coupling nut 23 has been formed, it can be pushed onto the outer side of the socket end 13, 14, 15 until the inner screw thread of the coupling nut 23 touches the outer screw thread 12 of the socket end 13, 14, 15, after which the coupling nut 23 is screwed onto the screw thread 12, thus tightening the coupling.

It should be noted that the figures only show a preferred embodiment of the invention and that the invention is not limited to this preferred embodiment. Thus, for example, a connecting piece with two socket ends or more than three socket ends is also conceivable within the scope of the invention. Furthermore, in the illustrated example, the sealing ribs 3 are all situated on a shell part 1, while all the grooves 4' are situated on the other, complementary shell part 1'. However, it is also conceivable to provide a part of the edges 2 of the shell part 1 with sealing ribs and a part with grooves, and to do the same with the complementary shell part 1'. Furthermore, it is possible to connect the shell parts to one another by means of hinge means, for example a film hinge. It is also possible, in the case of rotation-symmetrical connecting pieces, such as straight couplings or symmetrical branches (Y pieces), for both shaped parts to be exactly identical and thus only one mould is required for the two shell parts. If the sealing rib 3 is co-injected, this is then carried out on the half of the shell parts. It will be clear that, in that case, the grooves 4, 4' are also identical. Also, the outer screw thread 12 on the connecting piece and the inner screw thread of the coupling nut 23 are double-threaded, which in turn may offer the advantage that they have a greater pitch and can thus be fitted more quickly.

## Claims

1. Connecting piece for connecting two or more pipe ends (20) of protective cable pipes, which connecting piece comprises at least two shell parts (1) which are divided by a dividing plane and fit together by their shell edges (2) situated in the dividing plane, wherein at least one of the shell edges (2) of one of the shell parts is provided with a sealing rib (3) and the shell part (1) situated opposite is provided with a groove (4, 4') at the corresponding shell edge (2), the sealing rib (3) being accommodated in the groove (4, 4') when the shell parts (1) are fitted together in order to seal the partial seam which is formed between the abutting shell edges (2), and wherein the connecting piece has at least two socket ends (13, 14, 15) for connecting the pipe ends (20), wherein a contact surface (6) is provided in the socket ends (13, 14, 15) against which a separate sealing ring (10) with its outer surface (11) bears in a sealing manner, which sealing ring (10), in use, engages with the outer side of a connected protective cable pipe in a sealing manner, **characterized in that** the contact surface (6) in the socket end (13, 14, 15) is a conical surface which narrows from the outside to the inside in the axial direction wherein the sealing rib (3) has an end portion (7) which is situated in the contact surface (6) of the socket end (13, 14, 15) so that the outer surface (11) of the sealing ring (10), in use, bears against the end portion (7) of the sealing rib (3) in a sealing manner.

2. Connecting piece according to claim 1, wherein the sealing ring (10) has a conical outer surface (6).

3. Connecting piece according to one of the preceding claims, in which the sealing ring (10), on a side which is turned outwards in use, is provided with a tapered end (18) which is clear from the socket end (13, 14, 15) and/or a pipe end (20) which extends through the sealing ring (10).

4. Connecting piece according to one of the preceding claims, wherein a side (9) of the end portion (7) of the sealing rib (3) turned away from the contact surface (6), which side, in use, bears against the shell parts (1) in a sealing manner, has a convex surface (9) at the location of at least one of the two shell parts (1).

5. Connecting piece according to one of the preceding claims, wherein at least one of the shell parts (1) has a concave surface at the location where, in use, the end section (7) of the sealing rib (3) bears against the respective shell part (1) in a sealing manner.

6. Connecting piece according to one of the preceding claims, wherein the connecting piece comprises a separable coupling nut (23) which can be fitted on the outer side of a socket end (13, 14, 15), and a securing ring (25) which can be accommodated in the coupling nut (23) and which is designed to retain the pipe in the socket end (13, 14, 15) in a tension-resistant manner and to lock the sealing ring (10) against the contact surface (6).

7. Connecting piece according to claim 6, wherein the inner side of the coupling nut (23) is provided with a conical surface (24) which, in use, engages with an outer side (16) of the securing ring (25) in such a manner that when a tensile force is applied to the pipe, the securing ring (25) engages more firmly with the pipe.

8. Connecting piece according to claim 6 or 7, wherein the securing ring (25) has an outer surface (16) which is such that the securing ring (25) inside the coupling nut (23) can be tilted to a certain degree with respect to the centre axis of the socket end (13, 14, 15).

9. Connecting piece according to one of claims 6-8, wherein the outer surface (16) of the securing ring (25) is at least partially spherical.

10. Connecting piece according to one of claims 6-9, wherein the securing ring (25, 25', 25", 25"'), viewed in the tangential direction, comprises alternating, radially outer ring segments (101) and radially inner ring segments (102) which are connected to one another by means of connecting parts which substantially extend radially.

11. Connecting piece according to claim 10, wherein the securing ring (25, 25', 25", 25'") has a longitudinal cut (104) which is provided at the location of a connecting part.

12. Connecting piece according to one of claims 6-11, wherein the securing ring (25, 25', 25", 25'") has a longitudinal cut (104) which extends in a direction between the radial direction and the tangential direction.

13. Connecting piece according to one of the preceding claims, wherein the sealing ribs (3) for sealing the partial seam between the shell parts are provided on the respective shell edge (2) by means of co-injection.

## Patentansprüche

1. Verbindungsstück zum Verbinden zweier oder mehrerer Rohrenden (20) von Kabelschutzrohren, wobei das Verbindungsstück mindestens zwei Hülsenteile (1) aufweist, die durch eine Teilungsebene aufgeteilt sind und über ihre in der Teilungsebene angeordneten Hülsenkanten (2) zusammengefügt werden, wobei mindestens eine der Hülsenkanten (2) von einem der Hülsenteile mit einer Dichtungsrippe (3) bereitgestellt ist und das gegenüberliegend angeordnete Hülsenteil (1) mit einer Nut (4, 4') an der korrespondierenden Hülsenkante (2) bereitgestellt ist, wobei die Dichtungsrippe (3) in der Nut (4, 4') aufgenommen wird, wenn die Hülsenteile (1) zusammengefügt werden, um die Teilnaht abzudichten, die zwischen den anliegenden Hülsenkanten (2) ausgebildet ist, und wobei das Verbindungsstück mindestens zwei Muffen (13, 14, 15) zum Verbinden der Rohrenden (20) aufweist, wobei eine Kontaktfläche (6) in den Muffen (13, 14, 15) bereitgestellt ist, gegen die sich ein freistehender Dichtungsring (10) mit seiner Außenfläche (11) in einer dichtenden Weise abstützt, wobei der Dichtungsring (10) bei Verwendung in die Außenseite eines verbundenen Kabelschutzrohrs in einer dichtenden Weise eingreift, **dadurch gekennzeichnet, dass** die Kontaktfläche (6) in der Muffe (13, 14, 15) eine konische Oberfläche ist, die sich in der axialen Richtung von außen nach innen verengt, wobei die Dichtungsrippe (3) einen Endabschnitt (7) aufweist, der sich in der Kontaktfläche (6) der Muffe (13, 14, 15) befindet, so dass die Außenfläche (11) des Dichtungsrings (10) sich bei Verwendung an dem Endabschnitt (7) der Dichtungsrippe (3) in einer dichtenden Weise abstützt.

2. Verbindungsstück gemäß Anspruch 1, bei dem der Dichtungsring (10) eine konische Außenfläche (6) aufweist.

3. Verbindungsstück gemäß einem der vorstehenden Ansprüche, bei dem der Dichtungsring (10) auf einer Seite, die bei Verwendung nach außen gewandt ist, mit einem konisch zulaufenden Ende (18) bereitgestellt ist, das frei von der Muffe (13, 14, 15) und/oder einem Rohrende (20), das sich durch den Dichtungsring (10) erstreckt, ist.

4. Verbindungsstück gemäß einem der vorstehenden Ansprüche, bei dem eine Seite (9) des Endabschnitts (7) der Dichtungsrippe (3) von der Kontaktfläche (6) abgewandt ist, wobei die Seite, die sich bei Verwendung an den Hülsenteilen (1) in einer dichtenden Weise abstützt, an der Position von zumindest einer der zwei Hülsenteile (1) eine konvexe Oberfläche (9) aufweist.

5. Verbindungsstück gemäß einem der vorstehenden Ansprüche, bei dem mindestens eines der Hülsenteile (1) eine konkave Oberfläche an der Position aufweist, wo sich der Endabschnitt (7) der Dichtungsrippe (3) bei Verwendung an dem entsprechenden Hülsenteil (1) in einer dichtenden Weise abstützt.

6. Verbindungsstück gemäß einem der vorstehenden Ansprüche, bei dem das Verbindungsstück eine trennbare Kopplungsnut (23) aufweist, die an der Außenseite einer Muffe (13, 14, 15) montiert werden kann, und einen Sicherungsring (25), der in der Kopplungsnut (23) aufgenommen werden kann und der ausgeführt ist, um das Rohr in der Muffe (13, 14, 15) in einer zugfesten Weise zu halten und den Dichtungsring (10) gegen die Kontaktfläche (6) zu klemmen.

7. Verbindungsstück gemäß Anspruch 6, bei dem die Innenseite der Kopplungsnut (23) mit einer konischen Oberfläche (24) bereitgestellt ist, die bei Verwendung in eine Außenseite (16) des Sicherungsrings (25) in so einer Weise eingreift, dass der Sicherungsring (25) fester in das Rohr eingreift, wenn eine Zugkraft auf das Rohr aufgebracht wird.

8. Verbindungsstück gemäß Anspruch 6 oder 7, bei dem der Sicherungsring (25) eine Außenfläche (16) aufweist, die so ist, dass der Sicherungsring (25) in der Kopplungsnut (23) bis zu einem gewissen Grad im Verhältnis zu der Mittelachse der Muffe (13, 14, 15) geneigt werden kann.

9. Verbindungsstück gemäß einem der Ansprüche 6-8, bei dem die Außenfläche (16) des Sicherungsrings (25) zumindest teilweise kugelförmig ist.

10. Verbindungsstück gemäß einem der Ansprüche 6-9, bei dem der Sicherungsring (25, 25', 25", 25''') in der tangentialen Richtung gesehen, alternierend radiale äußere Ringsegmente (101) und radiale innere Ringsegmente (102) aufweist, die miteinander über sich im Wesentlichen radial erstreckende Verbindungsteile verbunden sind.

11. Verbindungsstück gemäß Anspruch 10, bei dem der Sicherungsring (25, 25', 25'', 25''') einen Längsschnitt (104) aufweist, der an der Position eines verbindenden Teils bereitgestellt ist.

12. Verbindungsstück gemäß einem der Ansprüche 6-11, bei dem der Sicherungsring (25, 25', 25", 25''') einen Längsschnitt (104) aufweist, der sich in einer Richtung zwischen der radialen Richtung und der tangentialen Richtung erstreckt.

13. Verbindungsstück gemäß einem der vorstehenden Ansprüche, bei dem die Dichtungsrippen (3) zum Dichten der Teilnaht zwischen den Hülsenteilen an der entsprechenden Hülsenkante (2) durch Co-Injektion bereitgestellt werden.

## Revendications

1. Pièce de raccordement pour lier deux ou plusieurs extrémités de tuyaux (20) de tuyaux de protection de câbles, laquelle pièce de raccordement comprend au moins deux parties de corps (1) qui sont divisées par un plan de division et s'assemblent par leurs bordures (2) de corps situées dans le plan de division, où au moins une des bordures (2) de corps de l'une des parties de corps est dotée d'une nervure d'étanchéité (3) et la partie de corps (1) située en regard est dotée d'une rainure (4, 4') à la bordure (2) de corps correspondante, la nervure d'étanchéité (3) étant reçue dans la rainure (4, 4') lorsque les parties de corps (1) sont assemblées afin de sceller le joint partiel qui est formé entre les bordures (2) de corps en aboutement, et où la pièce de raccordement a au moins deux extrémités d'emboîture (13, 14, 15) pour lier les extrémités de tuyaux (20), où une surface de contact (6) est prévue dans les extrémités d'emboîture (13, 14, 15) contre laquelle une bague d'étanchéité (10) avec sa surface extérieure (11) s'appuie de manière étanche, laquelle bague d'étanchéité (10), en utilisation, s'engage de manière étanche avec le côté extérieur d'un tuyau de protection de câble raccordé, **caractérisé en ce que** la surface de contact (6) dans l'extrémité d'emboîture (13, 14, 15) est une surface conique qui se rétrécit de l'extérieur vers l'intérieur dans la direction axiale où la nervure d'étanchéité (3) a une partie d'extrémité (7) qui est située dans la surface de contact (6) de l'extrémité d'emboîture (13, 14, 15) de sorte que la surface extérieure (11) de la bague d'étanchéité (10), en utilisation, s'appuie de manière étanche contre la partie d'extrémité (7) de la nervure d'étanchéité (3).

2. Pièce de raccordement selon la revendication 1, dans laquelle la bague d'étanchéité (10) a une surface extérieure conique (6).

3. Pièce de raccordement selon l'une des revendications précédentes, dans laquelle la bague d'étanchéité (10), sur un côté qui est regarde vers l'extérieur en utilisation, est dotée d'une extrémité effilée (18) qui est dégagée de l'extrémité d'emboîture (13, 14, 15) et/ou d'une extrémité de tuyau (20) qui s'étend à travers la bague d'étanchéité (10).

4. Pièce de raccordement selon l'une des revendications précédentes, dans laquelle un côté (9) de la partie d'extrémité (7) de la nervure d'étanchéité (3) dos à la surface de contact (6), lequel côté, en utilisation, s'appuie contre les parties de corps (1) de manière étanche, a une surface convexe (9) à l'emplacement d'au moins une des deux parties de corps (1).

5. Pièce de raccordement selon l'une des revendications précédentes, dans laquelle au moins l'une des parties de corps (1) a une surface concave à l'endroit où, en utilisation, la section d'extrémité (7) de la nervure d'étanchéité (3) s'appuie de manière étanche contre la partie de corps (1) respective.

6. Pièce de raccordement selon l'une des revendications précédentes, dans laquelle la pièce de raccordement comprend un écrou d'accouplement (23) séparable qui peut être monté sur le côté externe d'une extrémité d'emboîture (13, 14, 15), et une bague de fixation (25) qui peut être reçue dans l'écrou d'accouplement (23) et qui est conçue de sorte à retenir le tuyau dans l'extrémité d'emboîture (13, 14, 15) d'une manière résistante à la traction et pour verrouiller la bague d'étanchéité (10) contre la surface de contact (6).

7. Pièce de raccordement selon la revendication 6, dans laquelle le côté intérieur de l'écrou d'accouplement (23) est doté d'une surface conique (24) qui, en utilisation, s'engage avec un côté extérieur (16) de la bague de fixation (25) de telle sorte que lorsqu'une force de traction est appliquée au tuyau, la bague de fixation (25) s'engage plus fermement avec le tuyau.

8. Pièce de raccordement selon la revendication 6 ou 7, dans laquelle la bague de fixation (25) a une surface extérieure (16) qui est telle que la bague de fixation (25) à l'intérieur de l'écrou d'accouplement (23) peut être inclinée à un certain degré par rapport à l'axe central de l'extrémité d'emboîture (13, 14, 15).

9. Pièce de raccordement selon l'une des revendications 6-8, dans laquelle la surface extérieure (16) de la bague de fixation (25) est au moins partiellement sphérique.

10. Pièce de raccordement selon l'une des revendications 6-9, dans laquelle la bague de fixation (25, 25', 25", 25'''), vue dans la direction tangentielle, comprend en alternance, des segments (101) de bague radialement extérieurs et des segments (102) de bague radialement intérieurs qui sont reliés les uns aux autres au moyen de pièces de liaison qui s'étendent sensiblement de manière radiale.

11. Pièce de raccordement selon la revendication 10, dans laquelle la bague de fixation (25, 25', 25", 25''') a une découpe longitudinale (104) qui est prévue à l'emplacement d'une partie de liaison.

12. Pièce de raccordement selon l'une des revendications 6-11, dans laquelle la bague de fixation (25, 25', 25", 25''') a une découpe longitudinale (104) qui s'étend dans une direction entre la direction radiale et la direction tangentielle.

13. Pièce de raccordement selon l'une des revendications précédentes, dans laquelle les nervures d'étanchéité (3) pour sceller le joint partial entre les parties de corps sont prévues sur la bordure (2) de corps respective par co-injection.
